# EUROPÄISCHE PATENTSCHRIFT

(11) **EP 2 794 344 B1**
(45) Veröffentlichungstag und Bekanntmachung des Hinweises auf die Patenterteilung: **06.03.2019**
(21) Anmeldenummer: 12794260.5
(22) Anmeldetag: 21.11.2012
(51) Int. Cl.: B60N 2/07, B60N 2/06, B60N 2/08

(54) **ENTRIEGELUNGSVORRICHTUNG FÜR DAS VERRIEGELUNGSMITTEL EINER SITZSCHIENE**
UNLOCKING DEVICE FOR LOCKING MEANS OF A SEAT RAIL
DISPOSITIF DE DÉVERROUILLAGE POUR MOYENS DE VERROUILAGE D'UN RAIL DE SIEGE

(30) Priorität: 20.12.2011 DE 102011121557; 27.03.2012 DE 102012006060
(43) Veröffentlichungstag der Anmeldung: 29.10.2014
(73) Patentinhaber: Adient Luxembourg Holding S.à r.l., 1855 Luxembourg (LU)
(72) Erfinder: JÄHNER, Falko, Bloomfield Hills, MI 48301 (US); RUEß, Georg, 66851 Oberarnbach (DE); KREBS, Jürgen, 67806 Rockenhausen (DE)
(74) Vertreter: Wolff, Felix
(86) Internationale Anmeldenummer: PCT/EP2012/073258
(87) Internationale Veröffentlichungsnummer: WO 2013/092089

(56) Entgegenhaltungen:
- WO-A1-2007/095762
- DE-A1- 2 411 414
- US-A- 5 806 825

## Beschreibung

Die vorliegende Erfindung betrifft eine Sitzlängsverstellung für einen Kraftfahrzeugsitz mit einer Oberschiene und einer Unterschiene und einer Entriegelungsvorrichtung.

Sitze in Kraftfahrzeugen weisen heutzutage in der Regel eine Ober- und eine Unterschiene auf, entlang derer sie, insbesondere in und gegen die Fahrtrichtung des Kraftfahrzeuges, verstellt werden können. Um den Fahrzeugsitz in einer bestimmten Längsposition arretieren zu können, ist ein Verriegelungsmittel vorgesehen, das die Position der beiden Schienen relativ zueinander fixiert. Dieses Verriegelungsmittel muss nun bedarfsweise zur Verstellung der Längsposition des Fahrzeugsitzes gelöst werden. Dafür ist eine Entriegelungsvorrichtung vorgesehen, die aber bei Fahrzeugsitzen gemäß dem Stand der Technik oftmals aufwändig gestaltet und schwierig zu montieren ist. Die WO2007/095762A1 offenbart eine gattungsgemässe Sitzlängsverstellung.

Es war deshalb die Aufgabe der vorliegenden Erfindung, eine Entriegelungsvorrichtung zur Verfügung zu stellen, die die Nachteile des Standes der Technik nicht aufweist.

Gelöst wird die Aufgabe mit einer Sitzlängsverstellung für einen Kraftfahrzeugsitz mit einer Oberschiene und einer Unterschiene und einer Entriegelungsvorrichtung nach Anspruch 1.

Die vorliegende Erfindung betrifft eine Entriegelungsvorrichtung für die Ober- und die Unterschiene einer Sitzlängsverstellung eines Kraftfahrzeugsitzes. Zwischen der Oberschiene, die in der Regel mit dem Fahrzeugsitz verbunden ist, und der Unterschiene, die in der Regel mit der Karosserie des Kraftfahrzeuges verbunden ist, ist ein Verriegelungsmittel vorgesehen, das den Fahrzeugsitz in der gewünschten Position verriegelt. Um den Fahrzeugsitz verstellen zu können, muss dieses Verriegelungsmittel gelöst werden. Dafür ist eine Entriegelungsvorrichtung vorgesehen, die in dem vorliegenden Fall manuell betätigt wird. Diese Entriegelungsvorrichtung weist einen Hebel auf, der vorzugsweise drehbar an der Oberschiene des Fahrzeugsitzes gelagert ist. Ein Ende dieses Hebels wirkt mit dem Verriegelungsmittel zusammen und entriegelt dieses wahlweise. An dem anderen Ende ist eine Handhabe vorgesehen. Wird diese Handhabe betätigt, bewegt sich, vorzugsweise dreht sich, der Hebel relativ zu der Oberschiene von seiner Passivstellung in seine Entriegelungsstellung und überführt dabei das Verriegelungsmittel von seiner verriegelnden in eine entriegelnde Stellung. Um sicherzustellen, dass sich die Entriegelungsvorrichtung selbsttätig in ihre Passivstellung, in der sie nicht entriegelnd mit dem Verriegelungsmittel zusammenwirkt, verbringt, ist ein Federmittel vorgesehen, das den Hebel in seine Passivstellung vorspannt. Darüber hinaus verhindert dieses Federmittel, dass Klappergeräusche durch den Hebel entstehen. Erfindungsgemäß ist nun vorgesehen, dass das Federmittel zusätzlich noch die Funktion der Lagerung des Hebels an der Oberschiene vornimmt. Dadurch werden Teile und damit Gewicht eingespart und die Montage vereinfacht.

Bei dem Federmittel handelt es sich beispielsweise um eine Schenkelfeder, die beispielsweise aus einem Draht gefertigt ist. An einem Ende ist die Schenkelfeder so gestaltet, dass der Draht sowohl eine Ausnehmung in dem Hebel als auch eine Ausnehmung in der Oberschiene durchgreift und dadurch als Drehlagerung fungiert.

Alternativ ist das Federmittel als Blattfeder gestaltet, die einerseits mit dem Hebel und andererseits mit der Oberschiene verbunden ist.

Vorzugsweise handelt es sich bei dem Hebel um ein insbesondere einstückig hergestelltes Blechbiegeteil. Vorzugsweise wird der Hebel aus Metall gefertigt. Vorzugsweise nimmt die Oberschiene den Hebel zumindest teilweise auf. Vorzugsweise weist der Hebel innerhalb der Oberschiene nur ein geringes Spiel, insbesondere quer zur Verstellrichtung des Fahrzeugsitzes auf.

Vorzugsweise wird das Ende des Hebels, das nicht mit dem Verriegelungsmittel zusammenwirkt, form-, kraft- und/oder stoffschlüssig mit einer Handhabe verbunden. Vorzugsweise wird die Handhabe auf oder in den Hebel gesteckt und form- und/oder kraftschlüssig, insbesondere rastend, mit diesem verbunden. Vorzugsweise weisen der Hebel und/oder die Handhabe Mittel für eine rastende Verbindung auf. Weiterhin bevorzugt weisen die Handhabe und/oder der Hebel Sicherungsmittel auf, mit denen verhindert wird, dass die Handhabe missbräuchlich von dem Hebel gelöst werden kann.

Besonders bevorzugt weist die Entriegelungsvorrichtung ein Sicherungsmittel auf, das verhindert, dass der Hebel bei einer missbräuchlichen Belastung der Handhabe beschädigt wird. Beispielsweise handelt es sich bei diesem Sicherungsmittel um eine Verbindung, die sich bei Überschreiten einer gewissen Belastung, insbesondere bei Überschreiten eines gewissen Biegemomentes, selbsttätig löst, so dass die Handhabe nicht mehr fest mit dem Hebel verbunden ist. Dadurch wird eine Beschädigung der Entriegelungsvorrichtung bzw. des Verriegelungsmittels verhindert.

Der Fachmann versteht, dass ein Fahrzeugsitz in der Regel mit zwei Ober- und zwei Unterschienen gelagert ist, wobei jede Ober- bzw. Unterschiene eine erfindungsgemäße Entriegelungsvorrichtung aufweist, die vorzugsweise jedoch durch eine gemeinsame Handhabe betätigt werden.

Im Folgenden wird die Erfindung anhand der Figuren 1 - 5c erläutert. Diese Erläuterungen sind lediglich beispielhaft und schränken den allgemeinen Erfindungsgedanken nicht ein.
- **Figur 1**: zeigt die erfindungsgemäße Entriegelungsvorrichtung.
- **Figur 2**: zeigt die Montage der Entriegelungsvorrichtung an der Oberschiene.
- **Figuren 3a und b**: zeigen das Verriegelungsmittel gemäß den Figuren 1 und 2 in ihrer Passiv- und ihrer entriegelnden Stellung.
- **Figuren 4a - 4c**: zeigen die Entriegelungsvorrichtung gemäß den Figuren 3a und b, die mit einer Handhabe versehen ist.
- **Figuren 5a - 5c**: zeigen eine weitere Ausführungsform der erfindungsgemäßen Entriegelungsvorrichtung.

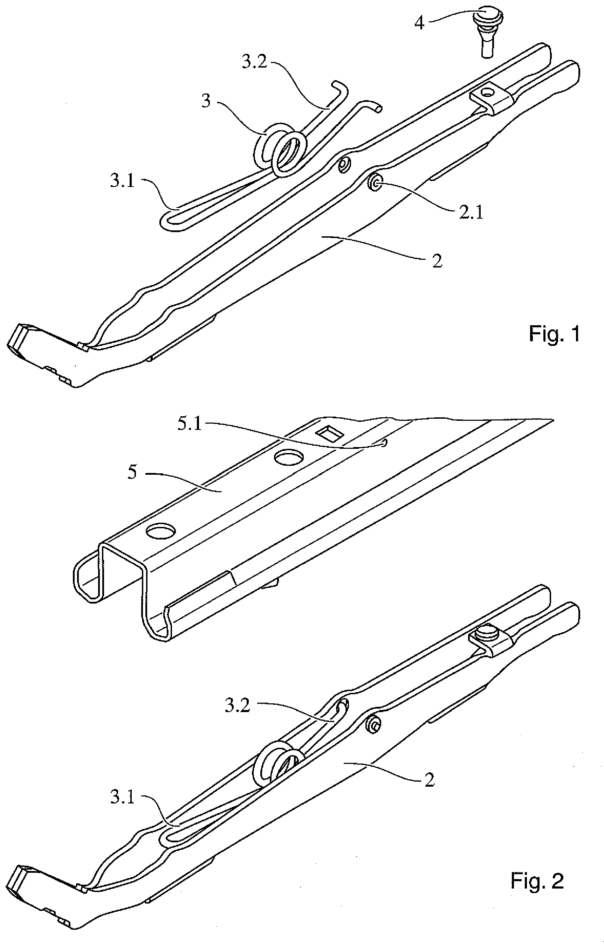

Figur 1 zeigt die erfindungsgemäße Entriegelungsvorrichtung, die einen Hebel 2 aufweist. Dieser Hebel ist vorzugsweise aus Metallblech, insbesondere einstückig, gefertigt, indem das Blech zunächst ausgestanzt und dann gebogen wird. Dieser Hebel weist jeweils rechts und links eine Ausnehmung 2.1 auf. Des Weiteren ist die Entriegelungsvorrichtung mit einem Federmittel 3, hier einer Schenkelfeder, versehen. Diese Schenkelfeder weist ein erstes Ende 3.1 und ein zweites Ende 3.2 auf. Darüber hinaus ist die Entriegelungsvorrichtung vorzugsweise mit einem Dämpfer 4 versehen, der in eine an dem Hebel 2 vorgesehene Öffnung eingeführt wird.

Wie insbesondere Figur 2 entnommen werden kann, wird der Draht des Endes 3.2 der Schenkelfeder 3 in die Ausnehmungen 2.1 des Hebels 2 eingeführt und steht aus diesen soweit hinaus, dass diese herausstehenden Enden beim Einführen des Hebels in eine Oberschiene 5 in deren Ausnehmungen 5.1 einrasten. Dadurch bildet das Federmittel 3 ein Drehlager für den Hebel 2 relativ zu der Oberschiene 5. Das Ende 3.1 des Federmittels 3 stützt sich an dem Hebel 2 ab.

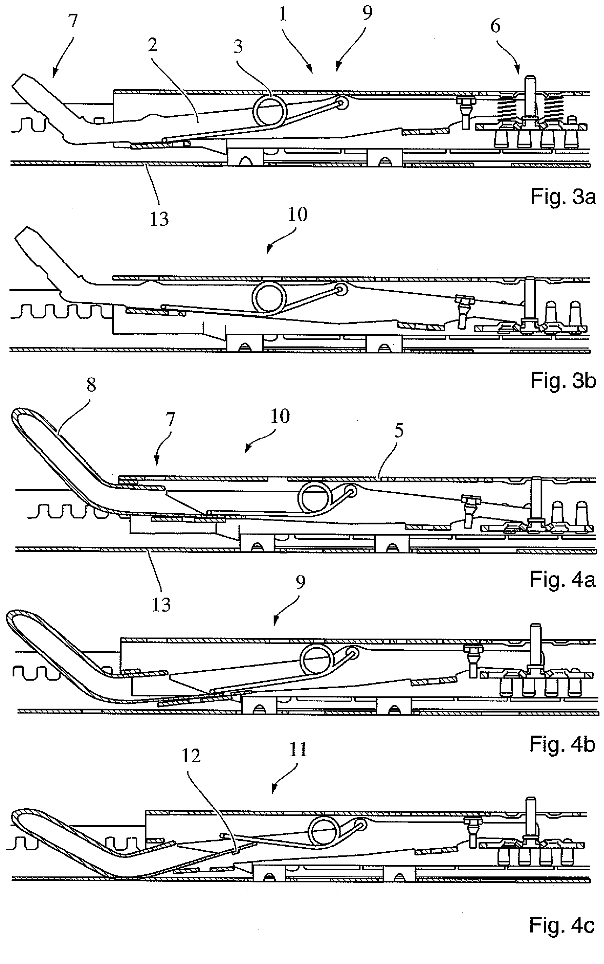

Figur 3a zeigt die Entriegelungsvorrichtung im Zusammenspiel mit einem Verriegelungsmittel 6, das dem Fachmann bekannt ist und das die Oberschiene 5, die in der Regel mit dem Fahrzeugsitz verbunden ist, relativ zu einer Unterschiene 13, die mit der Karosserie des Fahrzeugsitzes verbunden ist, verriegelt. In Figur 3a befindet sich das Entriegelungsmittel in seiner Passivstellung, in die es durch das Federmittel 3 vorgespannt wird und in der es nicht mit dem Verriegelungsmittel 6 entriegelnd zusammenwirkt. Der Fachmann erkennt, dass der Hebel 2 einen Anschlussbereich 7 aufweist, mit dem eine Handhabe insbesondere form- und/oder kraftschlüssig verbunden werden kann.

Figur 3b zeigt die Ausführungsform gemäß Figur 3a, wobei der Hebel 2 nunmehr im Uhrzeigersinn nach oben gedreht worden ist und dadurch das Verriegelungsmittel 6 so betätigt, dass es nicht mehr verriegelnd wirkt, so dass die Oberschiene relativ zu der Unterschiene verstellt werden kann. Der Hebel 2 dreht sich dabei um das Drehlager, das durch das Federmittel 3 gebildet wird.

In den Figuren 4a und 4b ist im Wesentlichen die Entriegelungsvorrichtung gemäß den Figuren 3a und 3b dargestellt, wobei Figur 4a die Entriegelungsvorrichtung in ihrer Entriegelungsstellung und Figur 4b die Entriegelungsvorrichtung in ihrer Passivstellung zeigt. In dem vorliegenden Fall ist eine Handhabe in den Hebel hinein oder auf den Hebel 2 aufgesteckt und so mit diesem verbunden, dass die Handhabe nicht missbräuchlich von dem Hebel abgezogen werden kann. Das Federelement 3 sorgt vorzugsweise dafür, dass die Verbindung zwischen der Handhabe 8 und dem Hebel 2 keine Geräusche verursacht. Vorzugsweise ist zwischen der Handhabe 8 und dem Hebel 2 ein Befestigungsmittel 12, insbesondere ein rastendes Befestigungsmittel vorgesehen. Dieses Befestigungsmittel 12 zwischen der Handhabe 8 und dem Hebel 2 ist vorzugsweise so gestaltet, dass sich die Handhabe 8, wie in Figur 4c dargestellt, von dem Hebel löst, wenn die Handhabe missbräuchlich betätigt wird, d. h. beispielsweise zu weit gegen den Uhrzeigersinn verdreht wird. Vorzugsweise löst sich dann das Befestigungsmittel 12 von dem Hebel 2, so dass der Hebel 2 bzw. der nachfolgende Mechanismus nicht beschädigt wird. Der Fachmann versteht, dass eine derartige "Sollbruchstelle" auch an einer anderen Stelle der erfindungsgemäßen Vorrichtung vorgesehen sein kann. Der Fachmann versteht des weiteren, dass die Verbindung zwischen der Handhabe 8 und dem Hebel 2, das Befestigungsmittel 12 und/oder das Federmittel 3 so gestaltet sein kann/können, dass die Feder 3 die Handhabe 8 und/oder das Befestigungsmittel 12 in ihre ursprüngliche Stellung (vgl. Fig. 4b) zurückstellt, sobald die missbräuchliche Belastung nicht mehr an dem Hebel 8 anliegt. Die Entriegelungsvorrichtung kann dann unbeschädigt weiterbenutzt werden.

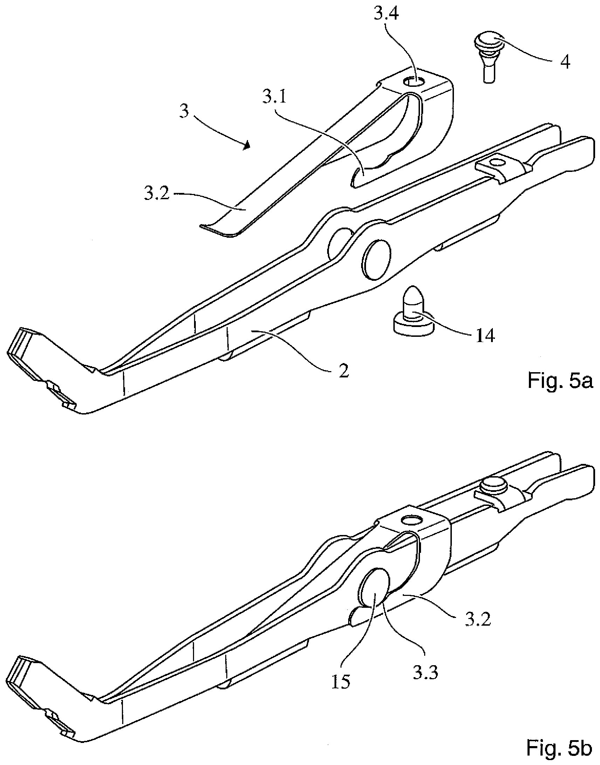

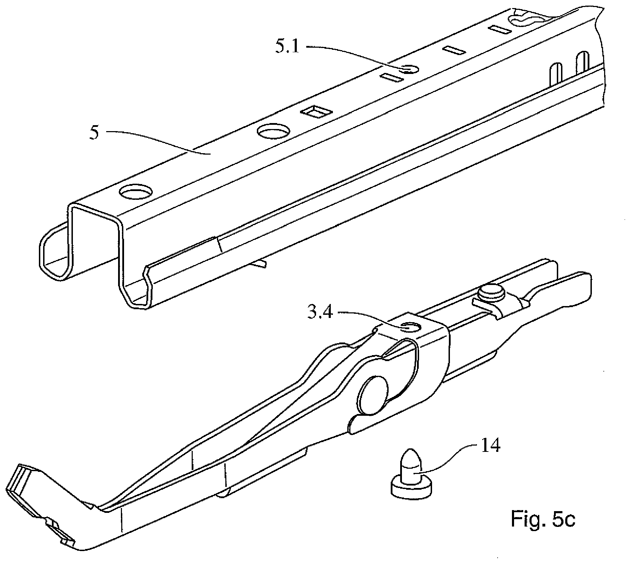

In den Figuren 5a - c ist eine weitere Ausführungsform der erfindungsgemäßen Vorrichtung dargestellt. In dem vorliegenden Fall ist das Federmittel als Blattfeder gestaltet, deren eines Ende mit dem Hebel 2 verbunden wird. Die Verbindung des Endes 3.1 mit dem Hebel 2 erfolgt in dem vorliegenden Fall durch einen Vorsprung 15, der an dem Hebel 2 vorgesehen ist. Das andere Ende 3.2 der Blattfeder stützt sich wiederum an dem Hebel 2 ab. Des Weiteren weist die Blattfeder eine Ausnehmung 3.4 auf. Diese Ausnehmung wird durch ein Befestigungsmittel 14, beispielsweise eine Schraube 14 mit vorzugsweise einem selbstschneidenden Gewinde, mit der Oberschiene 5 verbunden, wobei die Schraube 14 in die Ausnehmung 5.1 der Oberschiene 5 eingreift. Des Weiteren ist auch bei dieser Ausführungsform vorzugsweise ein Dämpfer 4 vorgesehen, mit dem die Geräuschentwicklung der erfindungsgemäßen Entriegelungsvorrichtung zumindest vermindert werden soll. Ansonsten wird auf die Ausführungen zu den oben stehenden Figuren verwiesen.

### Bezugszeichenliste:

- 1: Entriegelungsvorrichtung
- 2: Hebel
- 2.1: Ausnehmung für das Federmittel 3
- 3: Federmittel
- 3.1: erster Schenkel
- 3.2: zweiter Schenkel
- 3.3: Formschlussmittel, Einbuchtung
- 3.4: Ausnehmung, Ausnehmung mit Gewinde
- 4: Dämpfer
- 5: Oberschiene
- 5.1: Ausnehmung in der Oberschiene
- 6: Verriegelungsmittel
- 7: Anschlussbereich für eine Handhabe 8
- 8: Handhabe
- 9: Passivstellung
- 10: Entriegelungsstellung
- 11: Missbrauchsstellung
- 12: Befestigungsmittel
- 13: Unterschiene
- 14: Befestigungsmittel
- 15: Befestigungsmittel, Vorsprung

## Patentansprüche

1. Sitzlängsverstellung für einen Kraftfahrzeugsitz mit einer Oberschiene (5), einer Unterschiene (13) und einer Entriegelungsvorrichtung (1), die einen Hebel (2) aufweist, an dessen einem Ende eine Handhabe (8) vorgesehen ist und dessen anderes Ende mit einem Verriegelungsmittel (6) zusammenwirkt, wobei die Entriegelungsvorrichtung (1) ein Federmittel (3) aufweist, das den Hebel (2) in seine Passivstellung vorspannt, wobei das Federmittel (3) den Hebel (2) an der Oberschiene (5) befestigt, insbesondere drehbar lagert, **dadurch gekennzeichnet, dass** zwischen der Handhabe (8) und dem Hebel (2) eine Verbindung vorgesehen ist, die sich bei Überschreiten einer gewissen missbräuchlichen Belastung selbsttätig löst, wobei das Federmittel (3) so gestaltet ist, dass das Federmittel (3) die Handhabe (8) in ihre ursprüngliche Stellung zurückstellt, sobald die missbräuchliche Belastung des Hebels (2) beendet ist.

2. Sitzlängsverstellung nach Anspruch 1, **dadurch gekennzeichnet, dass** das Verriegelungsmittel (6) die Oberschiene (5) mit der Unterschiene (13) lösbar verriegelt.

3. Sitzlängsverstellung nach Anspruch 1 oder 2, **dadurch gekennzeichnet, dass** das Federmittel (3) eine Schenkelfeder ist, die vorzugsweise aus einem Draht gefertigt ist.

4. Sitzlängsverstellung nach Anspruch 3, **dadurch gekennzeichnet, dass** der Draht der Schenkelfeder (3) sowohl eine Ausnehmung (2.1) in dem Hebel (2) als auch eine Ausnehmung (5.1) in der Oberschiene (5) durchgreift und dadurch als Drehlagerung fungiert.

5. Sitzlängsverstellung nach Anspruch 1 oder 2, **dadurch gekennzeichnet, dass** das Federmittel (3) als Blattfeder gestaltet ist, die einerseits mit dem Hebel (2) und andererseits mit der Oberschiene (5) verbunden ist.

6. Sitzlängsverstellung nach einem der voranstehenden Ansprüche, **dadurch gekennzeichnet, dass** der Hebel (2) ein, insbesondere einstückig hergestelltes, Blechbiegeteil ist.

7. Sitzlängsverstellung nach einem der voranstehenden Ansprüche, **dadurch gekennzeichnet, dass** die Oberschiene (5) den Hebel (2) zumindest teilweise aufnimmt.

8. Sitzlängsverstellung nach einem der voranstehenden Ansprüche, **dadurch gekennzeichnet, dass** das Ende des Hebels (2), das nicht mit dem Verriegelungsmittel (6) zusammenwirkt, form-, kraft- und/oder stoffschlüssig mit der Handhabe (8) verbunden ist.

9. Sitzlängsverstellung nach Anspruch 8, **dadurch gekennzeichnet, dass** die Handhabe (8) auf oder in den Hebel (2) gesteckt und form- und/oder kraftschlüssig, insbesondere rastend, mit diesem verbunden ist.

10. Sitzlängsverstellung nach einem der voranstehenden Ansprüche, **dadurch gekennzeichnet, dass** sie ein Sicherungsmittel aufweist, das verhindert, dass der Hebel (2) bei einer missbräuchlichen Belastung der Handhabe (8) beschädigt wird, wobei vorzugsweise das Federmittel (3), insbesondere ein Schenkel (3.1, 3.2) des Federmittels (3), Teil des Sicherungsmittels ist.

## Claims

1. Longitudinal seat adjustment system for a motor vehicle seat having an upper rail (5), a lower rail (13) and a release device (1) which has a lever (2), a handle (8) being provided at one end thereof and the other end thereof cooperating with a locking means (6), wherein the release device (1) has a spring means (3) which pretensions the lever (2) into the passive position thereof, wherein the spring means (3) fastens, in particular mounts in a rotatable manner, the lever (2) to the upper rail (5), **characterized in that** a connection is provided between the handle (8) and the lever (2), which connection automatically detaches when a certain inappropriate loading is exceeded, wherein the spring means (3) is configured such that the spring means (3) sets the handle (8) back into its original position as soon as the inappropriate loading of the lever (2) has ended.

2. Longitudinal seat adjustment system according to Claim 1, **characterized in that** the locking means (6) releasably locks the upper rail (5) to a lower rail (13) .

3. Longitudinal seat adjustment system according to Claim 1 or 2, **characterized in that** the spring means (3) is a leg spring which is preferably produced from a wire.

4. Longitudinal seat adjustment system according to Claim 3, **characterized in that** the wire of the leg spring (3) passes through both a recess (2.1) in the lever (2) and a recess (5.1) in the upper rail (5) and, as a result, functions as a rotary bearing.

5. Longitudinal seat adjustment system according to Claim 1 or 2, **characterized in that** the spring means (3) is designed as a leaf spring which, on the one hand, is connected to the lever (2) and, on the other hand, is connected to the upper rail (5).

6. Longitudinal seat adjustment system according to one of the preceding claims, **characterized in that** the lever (2) is a bent sheet metal part produced, in particular, in one piece.

7. Longitudinal seat adjustment system according to one of the preceding claims, **characterized in that** the upper rail (5) at least partially receives the lever (2) .

8. Longitudinal seat adjustment system according to one of the preceding claims, **characterized in that** the end of the lever (2) which does not cooperate with the locking means (6) is connected to the handle (8) by a positive, non-positive and/or material connection.

9. Longitudinal seat adjustment system according to Claim 8, **characterized in that** the handle (8) is fitted onto or into the lever (2) and is connected thereto positively and/or non-positively, in particular by a latching connection.

10. Longitudinal seat adjustment system according to one of the preceding claims, **characterized in that** said release device has a safety means which prevents the lever (2) from being damaged in the case of inappropriate loading of the handle (8), wherein the spring means (3), in particular a leg (3.1, 3.2) of the spring means (3), is preferably part of the safety means.

## Revendications

1. Dispositif de réglage longitudinal pour un siège de véhicule automobile, comprenant un rail supérieur (5), un rail inférieur (13) et un dispositif de déverrouillage (1) qui comprend un levier (2) à l'une des extrémités duquel est prévue une poignée (8) et dont l'autre extrémité coopère avec un moyen de verrouillage (6), le dispositif de déverrouillage (1) comprenant un moyen ressort (3) qui précontraint le levier (2) dans sa position passive, le moyen ressort (3) fixant, en particulier supportant de manière rotative, le levier (2) sur le rail supérieur (5), **caractérisé en ce qu'**une liaison est prévue entre la poignée (8) et le levier (2), laquelle liaison se libère automatiquement en cas de dépassement d'une certaine sollicitation abusive, le moyen ressort (3) étant conçu de telle sorte que le moyen ressort (3) ramène la poignée (8) à sa position d'origine dès que la sollicitation abusive du levier (2) est terminée.

2. Dispositif de réglage longitudinal de siège selon la revendication 1, **caractérisé en ce que** le moyen de verrouillage (6) verrouille de manière libérable le rail supérieur (5) sur le rail inférieur (13).

3. Dispositif de réglage longitudinal de siège selon la revendication 1 ou 2, **caractérisé en ce que** le moyen ressort (3) est un ressort à branches qui est fabriqué de préférence à partir d'un fil métallique.

4. Dispositif de réglage longitudinal de siège selon la revendication 3, **caractérisé en ce que** le fil métallique du ressort à branches (3) vient en prise à la fois à travers un évidement (2.1) dans le levier (2) et à travers un évidement (5.1) dans le rail supérieur (5) et fonctionne de ce fait comme palier rotatif.

5. Dispositif de réglage longitudinal de siège selon la revendication 1 ou 2, **caractérisé en ce que** le moyen ressort (3) est conçu comme ressort à lame qui est relié d'une part au levier (2) et d'autre part au rail supérieur (5).

6. Dispositif de réglage longitudinal de siège selon l'une quelconque des revendications précédentes, **caractérisé en ce que** le levier (2) est une pièce pliée en tôle fabriquée en particulier d'une seule pièce.

7. Dispositif de réglage longitudinal de siège selon l'une quelconque des revendications précédentes, **caractérisé en ce que** le rail supérieur (5) reçoit au moins partiellement le levier (2).

8. Dispositif de réglage longitudinal de siège selon l'une quelconque des revendications précédentes, **caractérisé en ce que** l'extrémité du levier (2) qui ne coopère pas avec le moyen de verrouillage (6) est reliée à la poignée (8) par complémentarité de forme, à force et/ou par liaison de matière.

9. Dispositif de réglage longitudinal de siège selon la revendication 8, **caractérisé en ce que** la poignée (8) est enfichée sur ou dans le levier (2) et est reliée à celui-ci par complémentarité de forme et/ou à force, en particulier par encliquetage.

10. Dispositif de réglage longitudinal de siège selon l'une quelconque des revendications précédentes, **caractérisé en ce qu'**il comprend un moyen de sécurité qui empêche que le levier (2) ne soit endommagé en cas de sollicitation abusive de la poignée (8), le moyen ressort (3), en particulier une branche (3.1, 3.2) du moyen ressort (3), faisant de préférence partie du moyen de sécurité.
